Europäisches Patentamt

European Patent Office

Office européen des brevets

(11) Publication number : **0 460 817 A1**

# (12) EUROPEAN PATENT APPLICATION

(21) Application number : **91304372.5**

(22) Date of filing : **15.05.91**

(51) Int. Cl.⁵ : **B60R 7/08, G09F 7/18, G09F 13/18**

(30) Priority : **21.05.90 GB 9011361**

(43) Date of publication of application :
**11.12.91 Bulletin 91/50**

(84) Designated Contracting States :
**BE DE FR NL**

(71) Applicant : **Thomas, Roland Henri**
**Paladin House, Lenham Road**
**Ulcombe, Maidstone, Kent ME17 1LU (GB)**
Applicant : **Donnachie, Brian**
**Maybury, 10 Deepdene Drive**
**Dorking, Surrey, RH5 4AD (GB)**

(72) Inventor : **Thomas, Roland Henri**
**Paladin House, Lenham Road**
**Ulcombe, Maidstone, Kent ME17 1LU (GB)**
Inventor : **Donnachie, Brian**
**Maybury, 10 Deepdene Drive**
**Dorking, Surrey, RH5 4AD (GB)**

(74) Representative : **Loven, Keith James et al**
**Loven & Co Moulsham Mill Parkway**
**Chelmsford, Essex CM2 7PX (GB)**

(54) Information display device.

(57) . An information display device for a vehicle windscreen consists of a sheet of transparent flexible plastics material (1) attached to the inner face of the windscreen by, for example, Velcro tape (3) and (4), and having a surface upon which temporary ink markings can be made. The sheet (1) can be divided up by permanent markings printed thereon into areas identifying, for example, roads, junctions, distances etc.

FIG 3

EP 0 460 817 A1

This invention relates to an information display device for a vehicle windscreen.

In driving a motor vehicle on an unfamiliar route, it can be helpful to prepare notes of directions, for example roads to follow, turnings to make and distances. It is, of course, unsafe to refer to such notes whilst driving, and it is not always possible to stop the vehicle to consult the notes, for example when on a motorway. There is a need, therefore, for a means for recording such information in such a manner that the driver may consult it without looking away from the road.

It is known to adhere flexible plastics sheets bearing advertising material, for example, to windows of vehicles, but such materials are not readily removable, and are generally unsuitable for the purpose with which the present invention is concerned. Additionally, various proposals (see GB-A-1 472 403 and GB-A-1 527 053, for example) have been made for display sheets for attachment to walls for use in lectures, or as teaching aids. Such materials are typically opaque and are not suitable for use as an information display device for use on a vehicle windscreen.

The present invention provides an information display device for a vehicle windscreen, comprising a transparent flexible sheet member having a surface upon which temporary ink or other markings can be made, and attachment means for removably attaching the member to the inner surface of the vehicle windscreen, the attachment means comprising at least one first attachment member securable to said inner surface, and at least one second attachment member secured to the sheet member and removably engageable with said first attachment member.

The member may be provided with permanent markings defining different areas of the sheet member, the areas serving to permit details such as road, distance, junctions, etc to be entered. The markings may conveniently be in the form of vertical columns, and are preferably provided on the reverse of the sheet member so that the temporary ink markings do not impinge upon the permanent markings. Each of the different areas may be provided with distinguishing indicia such as identifying wording, and may be carried by transparent labels adhered to the sheet member, so that the user can select an appropriate heading from a number of different headings provided, according to his or her needs.

The sheet member is preferably sufficiently stiff to be self-supporting. It is suitably formed from a poly(methyl methacrylate) material, for example Perspex (Trade Mark). The thickness of the sheet member is suitably less than 1mm, preferably 0.75mm.

The means for removably attaching the sheet member to the windscreen may comprise a plurality of pairs of self-adhesive pads, one of the pads having a surface consisting of a plurality of hooks and the other pad having a surface consisting of a plurality of loops engageable with the hooks. A suitable material is Velcro (Trade Mark) tape. Preferably the pads are light transmissive.

The device may comprise, according to one embodiment, means for illuminating the surface thereof. Preferably, the illuminating means is arranged to introduce light into the sheet member from one edge thereof, so that the surface is illuminated from within the material.

The invention also provides, in combination, an information display device as hereinbefore defined, and a pen for making temporary ink markings thereon, the ink being such as to adhere to the surface of the sheet member sufficiently to permit visible markings to remain until wiped off. The ink is preferably a white ink, as this has been found to be visible both in light conditions, for example against a bright sky, and against a dark background.

Reference is made to the drawings, in which:

Figure 1 is a front view of a device in accordance with a preferred embodiment of the invention;

Figure 2 is an end view of the device shown in Figure 1;

Figure 3 is a perspective view showing the attachment of the device to the vehicle windscreen; and

Figure 4 is a partial side view of a motor vehicle, showing the installation of the device illustrated in the other Figures.

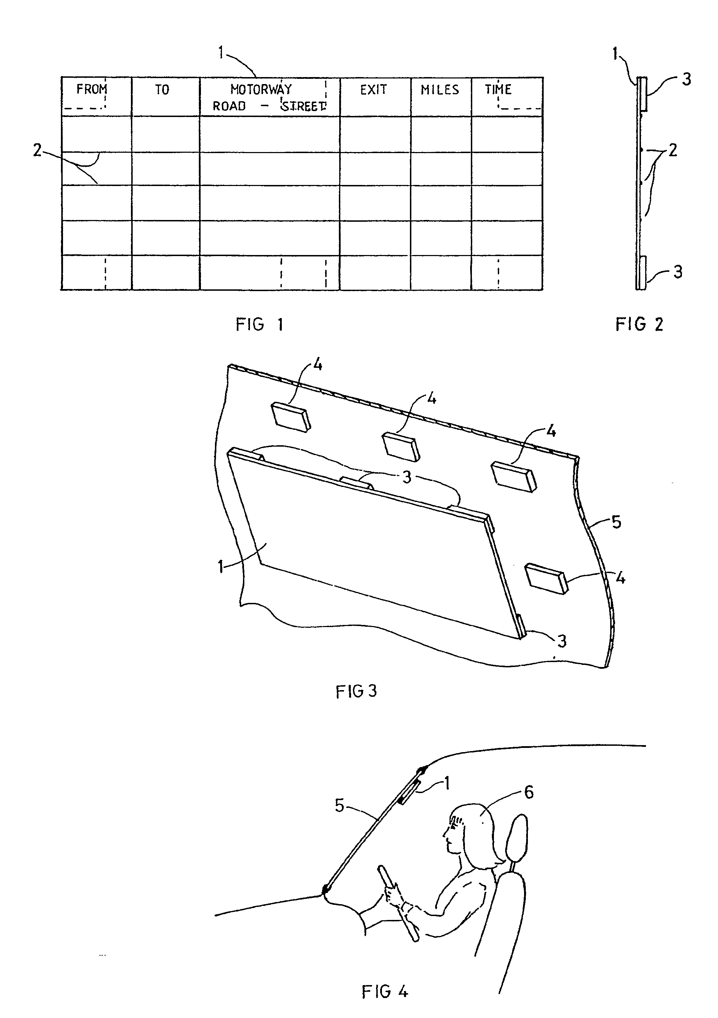

The device comprises a rectangular sheet of perspex approximately 0.75mm thick having printed on the reverse thereof, for example by screen printing techniques, lines 2 dividing the area into a series of columns, with horizontal lines subdividing the columns. Each column is provided with a heading identifying the information which it is to contain. At each corner of the sheet 1, and half-way along each longer edge thereof, is provided a fixing pad consisting of a Velcro (Trade Mark) self-adhesive tape, a first part 3 of which is adhered to the sheet 1, while the second part 4 adheres to the windscreen, as may be seen from Figure 3, for example. One part 3 has a surface consisting of a series of hooks, while the other part 4 has a surface consisting of a series of loops which can engage with the hooks, normally holding the two parts 3 and 4 firmly together. Thus, the sheet may be mounted in an appropriate position on the windscreen but may be readily removed therefrom for information to be entered on to the sheet, leaving the parts 4 of the Velcro tape adhered to the windscreen surface.

The positioning of the device on a motor vehicle is illustrated by Figure 4. The self-adhesive Velcro (Trade Mark) tapes are pressed into contact with the windscreen 5 so that the sheet 1 is positioned on the windscreen at a position corresponding to that occupied by the sun visor of the vehicle when this is lowered. Thus, the driver 6 may readily refer to the information written thereon without averting her (or his) gaze from the road significantly.

It will be appreciated that, while the device is illustrated as a means of recording route data, it may have other uses, for example to indicate a list of addresses for a delivery driver.

The markings on the device are suitably made by a white marker having an ink which wets the surface of the sheet and dries to provide a clear marking, but which can be readily wiped off the sheet, either by a damp cloth, or even a dry cloth.

It will be appreciated that the device, being relatively small and light, will not constitute a hazard to the driver in the event of an accident involving breakage of the windscreen.

## Claims

1. An information display device for a vehicle windscreen, comprising a transparent flexible sheet member having a surface upon which temporary ink or other markings can be made, and attachment means for removably attaching the member to the inner surface of the vehicle windscreen, the attachment means comprising at least one first attachment member securable to said inner surface, and at least one second attachment member secured to the sheet member and removably engageable with said first attachment member.

2. A device according to Claim 1, wherein the member is provided with permanent markings defining different areas of the sheet member.

3. A device according to Claim 2, wherein the permanent markings define a plurality of vertical columns.

4. A device according to Claim 2 or 3, wherein the permanent markings are provided on the reverse of the sheet member.

5. A device according to Claim 2, 3 or 4, wherein each of said areas is provided with distinguishing indicia.

6. A device according to Claim 5, wherein the distinguishing indicia are carried by transparent labels adhered to the sheet member.

7. A device according to any preceding claim, wherein the sheet member is sufficiently stiff to be self-supporting.

8. A device according to Claim 7, wherein the sheet member is formed of poly(methyl methacrylate).

9. A device according to any preceding claim, wherein the means for removably attaching the sheet member comprise a plurality of pairs of self-adhesive pads, one of the pads having a surface consisting of a plurality of hooks and the other pad having a surface consisting of a plurality of loops engageable with the hooks.

10. A device according to Claim 9, wherein the pads are light-transmissive.

11. A device according to any preceding claim, comprising means for illuminating the surface thereof.

12. A device according to Claim 11, wherein the illuminating means is arranged to introduce light into the sheet member from one edge thereof.

| FROM | TO | MOTORWAY ROAD — STREET | EXIT | MILES | TIME |
|------|-----|------------------------|------|-------|------|
|      |     |                        |      |       |      |
|      |     |                        |      |       |      |
|      |     |                        |      |       |      |
|      |     |                        |      |       |      |
|      |     |                        |      |       |      |

FIG 1

FIG 2

FIG 3

FIG 4

EP 0 460 817 A1

**European Patent Office**

# EUROPEAN SEARCH REPORT

Application Number

EP 91 30 4372

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | FR-A- 497 593 (GRATTE et al.)<br>* whole document * | 1,2 | B 60 R 7/08<br>G 09 F 7/18<br>G 09 F 13/18 |
| Y | US-A-4 762 258 (MURPHY)<br>* abstract; column 1, lines 15-28;<br>column 3, lines 41-47; figures 1-4 * | 1,2 | |
| A | | 9 | |
| A | DE-A-2 611 250 (SVENSKA AB LAMINATOR)<br>* page 3, line 1 - page 5, line 3;<br>claims 1-3; figures 1,2 * | 1,2,4,7 | |
| A | GB-A-2 161 638 (GLOSIGN)<br>* abstract; page 1, lines 16-35; page<br>1, lines 48-84; figures 1,2 * | 8,11,12 | |
| A | GB-A-2 171 236 (BARCONWOOD)<br>* page 1, lines 5-30; page 2, lines<br>39-99; figures 1,2,4 * | 8,11,12 | |
| A | GB-A-2 191 988 (C. PAUL)<br>* abstract; figure 3 * | 1 | TECHNICAL FIELDS SEARCHED (Int. Cl.5) |
| A | GB-A-2 096 379 (A. NILSSON)<br>* abstract; page 1, lines 51-71; figure<br>1 * | 1,9 | G 09 F 3/00<br>G 09 F 13/00<br>B 60 R 7/00 |
| A | DE-A-3 322 036 (WEINER)<br>* abstract; figures 1,2,5 * | 9 | |
| A | CH-A- 387 473 (WULFMEYER)<br>* whole document * | 1,9 | |
| A | FR-A-2 408 881 (MOLLARD)<br>* claims 1-5 * | 1,9 | |

The present search report has been drawn up for all claims

| Place of search | Date of completion of the search | Examiner |
|---|---|---|
| BERLIN | 23-09-1991 | BEITNER M.J.J.B. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document